Europäisches Patentamt

European Patent Office

Office européen des brevets

(11) Publication number : **0 514 356 A2**

(12) # EUROPEAN PATENT APPLICATION

(21) Application number : **92830219.9**

(22) Date of filing : **12.05.92**

(51) Int. Cl.⁵ : **G01L 9/02,** G01F 23/36, H01C 10/30

(30) Priority : **16.05.91 IT TO910107 U**

(43) Date of publication of application : **19.11.92 Bulletin 92/47**

(84) Designated Contracting States : **DE ES FR GB**

(71) Applicant : **SICEB S.p.A.**
**Via Rio Galletto 1**
**I-17045 Legino (Savona) (IT)**

(72) Inventor : **Bianco, Gianni, c/o Siceb S.p.A.**
**Via Rio Galletto 1**
**I-17045 Legino (Savona) (IT)**

(74) Representative : **Notaro, Giancarlo et al**
**c/o Jacobacci-Casetta & Perani S.p.A. Via Alfieri, 17**
**I-10121 Torino (IT)**

(54) **An electrical pressure indicator, particularly for motor vehicles.**

(57)  An electrical pressure indicator, particularly for motor vehicles, includes two movable contacts (4, 5) which are carried by a rotary arm (3) and both of which are in sliding contact with a comb-like formation (17) including conductive portions (18) alternating with insulating portions (19) and terminating in a deposit of resistive material (20), in order to provide a variable resistance directly proportional to the pressure detected. The radially inner movable contact (5) cooperates with a terminal conductive area (11) in order to indicate a predetermined anomalous pressure value.

EP 0 514 356 A2

The present invention relates to electrical pressure indicators, particularly for motor vehicles.

More specifically, the invention relates to a pressure indicator of the type having a rheostat with a slider for supplying an electrical signal indicative of the pressure and signalling means for indicating an anomalous pressure, the slider and the signalling means being controlled by a pressure-sensitive diaphragm.

In the present description, the term, "anomalous pressure" is intended to indicate a predetermined pressure threshold which can be reached by a fluid in a circuit and at which a system or an engine including the circuit may malfunction, for example, in a motor vehicle, a typical anomalous pressure is an inadequate engine-oil pressure.

In a known pressure indicator of the type defined above, a separate contact is activated indirectly by the same diaphragm to provide an electrical signal to a warning lamp when the diaphragm detects an anomalous pressure.

The object of the present invention is to provide an electrical pressure indicator of the type defined above in which the slider is used to perform the two functions of measuring the pressure and indicating an anomalous pressure.

According to the invention, this object is achieved by virtue of the fact that the slider includes an arm which is movable angularly about an axis of rotation along an insulating plate, normally a ceramic plate, carrying an arcuate conductive track which is concentric with the axis of rotation and is connected to a resistive layer deposited on the plate, and which cooperates in sliding contact with a first movable contact carried by the arm in order to provide a variable resistance to indicate the pressure and a second movable contact, also carried by the arm, for cooperating with an electrically-conductive area near one end of the conductive track to provide an anomalous-pressure signal.

The indicator according to the features specified above provides an indication of the pressure detected by the diaphragm by means of the first contact and also provides an anomalous-pressure signal by means of the second contact, with the use of a single movable element, constituted by the rotary arm, for these different functions.

In another particularly advantageous embodiment of the invention, the second movable contact is carried by the arm radially inwardly of the first movable contact and cooperates in sliding contact with a second arcuate track concentric with the axis of rotation of the arm and disposed radially inwardly of the conductive track, the second arcuate track also being a conductive track connected to the resistive layer.

By virtue of this further characteristic, for the greater part of the rotation of the arm about its axis, the first and second movable contacts both cooperate to indicate the pressure detected by the diaphragm thus considerably improving the reliability of the indicator. The redundancy of contact during the travel of the arm thus ensures a more reliable indication and there is no need to use auxiliary devices for indicating an anomalous pressure. When the second movable contact reaches the conductive area for indicating an anomalous pressure, the first movable contact alone remains in engagement with the resistive track and supplies the normal indication to an instrument associated with the indicator.

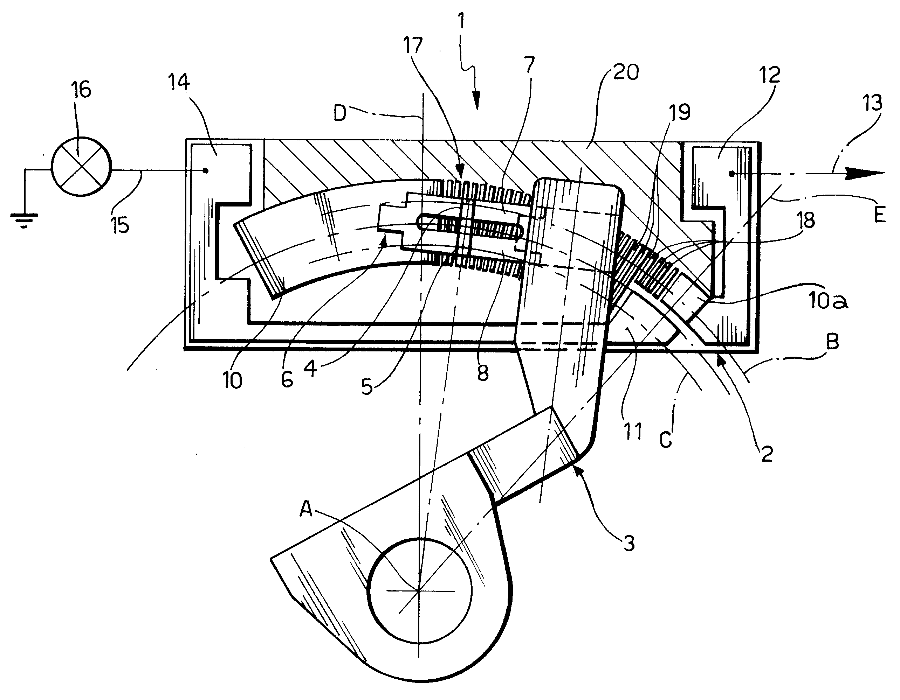

The invention will now be described in detail with reference to the appended drawing, provided purely by way of non-limiting example, which is a diagrammatic elevational view of an electrical pressure indicator according to the invention.

With reference to the drawing, an electrical pressure indicator, generally indicated 1, particularly for use in motor vehicles, includes a fixed plate 2 and a movable device 3.

The plate 2 is normally of ceramic material and its face which is visible in the drawing is covered with thick-film deposits of various materials formed by a technology similar to that used in the manufacture of printed circuits. First and second movable contacts 4, 5 in sliding contact with this face, which will be mentioned further below, are carried by the movable device 3, which is constituted by an arm rotatable about an axis A and carrying a resilient plate 6. The plate 6, which is substantially rectangular, has a central slot separating two parallel side extensions 7, 8 carrying the first movable contact 4 and the second movable contact 5, respectively. The plate 6 is shaped so as to ensure the necessary pressure of the two movable contacts 4, 5 against the face of the plate 2.

The movable device 3 is rotated about the axis A in known manner by the movement of a diaphragm (not shown in the drawing) which is sensitive to a pressure detectable, for example, in an element of a circuit of the engine of the motor vehicle containing a fluid under pressure.

With reference again to the active face of the plate 2, the deposits mentioned above include a layer of electrically-conductive material 10 at one end, which is extended at the opposite end to form a region 10a and below which is another layer of electrically-conductive material 11. The layers 10-10a and 11 are both arcuate and concentric with the axis A, the former being connected at 12 to a lead 13 which in turn is connected to the input of an electrical instrument of known type, not shown in the drawing, and the latter being connected at 14 to a lead 15 which in turn is connected to a warning lamp 16. The conductive layer 11 defines an area for indicating the detection of an anomalous pressure and the warning lamp 16, in fact, has the function of providing a warning signal when the anomalous pressure is reached.

An arcuate track 17 which is also concentric with the axis A between the two conductive layers 10-10a and 11 is constituted by a contact comb formed by alternating thin conductive portions 18 and insulating portions 19 which converge radially towards the axis of rotation A of the movable device 3. The insulating portions 19 are of a uniform width narrower than the conductive portions 18, the widths of which decrease, however, towards the axis A.

A deposit of electrically-resistive material, indicated 20, constituted, for example, by a paste, is disposed on an upper portion of the plate 2 outwardly of the track 17 and in contact with the radially outer edge thereof. The materials and the deposition technology of the track 17 and of the resistive layer 20 are generally known, for example, from EP-B-23949.

The radial dimension of the track 17 is such that, during the angular movements of the movable device 3, both the movable contacts 4, 5 are in sliding contact therewith, on paths indicated B and C respectively. In the extreme angular positions indicated D and E, however, the movable contacts 4, 5 are both in contact with the conductive deposit 10, in the first case, and in contact with an extension of the track 17 on the conductive deposit 10a and with the area 11 for indicating the anomalous pressure, respectively, in the second case. The extreme position D is reached upon detection of the maximum pressure, which corresponds to the maximum resistance at the terminal 13, and thus to the smallest current supplied to the instrument associated with the indicator 1. In the extreme position E, which corresponds to the minimum pressure detectable, the output supplied by the first movable contact 4 corresponds to the minimum resistance and the anomalous pressure signal provided by the presence of the second movable contact 5 on the conductive area 11 activates the lamp 16. When the first contact 4 is still in engagement with the conductive portions 18 near the extreme position E, the pressure value detected is still supplied to the indicator instrument but, in this situation, the second contact 5 can already engage the conductive area 11, thus simultaneously indicating that the anomalous pressure has been reached. When the first contact 4 reaches the layer 10a the minimum detectable pressure has been reached.

In all the intermediate configurations of the movable device 3, the variable resistance at the terminal 13 is provided by both the movable contacts 4, 5; the redundancy of contact thus makes the indicator 1 highly reliable in operation.

**Claims**

1. An electrical pressure indicator, particularly for motor vehicles, of the type having a rheostat with a slider for supplying an electrical signal indicative of pressure and signalling means for indicating an anomalous pressure, the slider and the signalling means being controlled by a pressure-sensitive diaphragm,

characterised in that the slider includes an arm (3) which is movable angularly about an axis of rotation (A) and an insulating plate (2), normally a ceramic plate, carrying an arcuate conductive track (B) which is concentric with the axis of rotation (A) and is connected to a resistive layer (20) deposited on the plate, and which cooperates in sliding contact with a first movable contact (4) carried by the arm (3) in order to provide a variable resistance to indicate the pressure and a second movable contact (5), also carried by the arm (3), for cooperating with an electrically-conductive area (11) near one end of the conductive track (B) to provide an anomalous-pressure signal.

2. An indicator according to Claim 1, characterised in that the second movable contact (5) is carried by the arm (3) radially inwardly of the first movable contact (4) and cooperates in sliding contact with a second arcuate track (C) concentric with the axis of rotation (A) of the arm (3) and disposed radially inwardly of the conductive track (B), the second arcuate track (C) also being a conductive track connected to the resistive layer (20).

3. An indicator according to Claim 2, characterised in that the two conductive tracks (B, C) form parts of a single, substantially comb-like formation (17) including electrically-conductive portions (18) alternating with electrically-insulating portions (19) and terminating in the deposit of electrically-resistive material (20) which is applied to the plate (2) radially outwardly of the formation (17).

4. An indicator according to Claim 3, characterised in that the conductive and insulating portions (18, 19) converge radially towards the axis of rotation (A) of the arm (3).

5. An indicator according to Claim 4, characterised in that the insulating portions (19) are preferably of uniform width.

6. An indicator according to Claim 4 or Claim 5, characterised in that the insulating portions (19) are preferably narrower than the conductive portions (18).